(19) Europäisches Patentamt / European Patent Office / Office européen des brevets

(11) EP 2 942 656 A1

(12) **EUROPEAN PATENT APPLICATION**

(43) Date of publication:
11.11.2015 Bulletin 2015/46

(51) Int Cl.:
*G02B 15/00* $^{(2006.01)}$    *G02B 17/02* $^{(2006.01)}$
*G02B 26/08* $^{(2006.01)}$

(21) Application number: 14275110.6

(22) Date of filing: 07.05.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: BAE Systems PLC
London SW1Y 5AD (GB)

(72) Inventor: **The designation of the inventor has not yet been filed**

(74) Representative: **BAE SYSTEMS plc**
**Group IP Department**
**Farnborough Aerospace Centre**
**Farnborough**
**Hampshire GU14 6YU (GB)**

(54) **Optical device**

(57)    The following invention relates to an optical device for use in a system that requires optical zoom or focus abilities, particularly for providing pre-set zoom parameters with a very low energy requirement.-There is provided an optical magnification device comprising at least one pair of optically aligned deformable reflectors, wherein each reflector pair has at least two configurations, wherein selection of a first and a second configuration of said deformable reflector pairs provides pre-defined magnification states, such that in any configuration one reflector is substantially concave and the other is substantially convex; at least one controller may cause both the reflectors to move between said at least two configurations.

Fig 1a

## Description

The following invention relates to an optical device for use in a system that requires optical zoom or focus abilities, particularly for providing pre-set zoom parameters with a very low energy requirement.

Before the present invention is described in further detail, it is to be understood that the invention is not limited to the particular embodiments described, as such may, of course, vary. It is also to be understood that the terminology used herein is for the purpose of describing particular embodiments only, and is not intended to be limiting, since the scope of the present invention will be limited only by the appended claims.

According to a first aspect of the invention there is provided an optical magnification device comprising at least one pair of optically aligned deformable reflectors, wherein each reflector pair has at least two configurations,

wherein selection of a first and a second configuration of said deformable reflector pairs provides pre-defined magnification states, such that in any configuration one reflector is substantially concave and the other is substantially convex; at least one controller may cause both the reflectors to move between said at least two configurations.

The device according to the invention provides a facile means of providing pre-set i.e. predefined magnification states. The first configuration may be substantially magnification, and the second configuration may be substantially demagnification.

The at least two reflectors within the reflector pair may be selected to adopt at least two states, such as a first state and a second state, the selection of which will provide the desired magnification or demagnification. The reflectors are substantially identical, that they both comprise the same focal lengths concave $f_1$ and convex $f_2$. The first optical length and second optical length of the first and second state for the reflector are different, such that $f_2 \# f_1$.

The reflector may be shaped to adopt any commonly used lens or reflector state, such as, for example, a simple lens shapes, such as, for example convex or concave, based on the radius of a sphere, or complex lens shapes such as, for example, aspherical, parabolic etc.

Depending on the selection of the configurations of the pair of reflectors, will provide either a magnification or demagnification output, i.e. M is either > 1 or < 1 , the latter being demagnification.

The at least two deformable reflectors comprise a first deformable reflector and a second deformable reflector, wherein the first reflector has a first state with a first focal length $f_2$, and second state with a second focal length $f_1$, and the second reflector has a first state with a first focal length $f_2$, and second state with a second focal length $f_1$,

such that in each configuration of said pair of reflectors, at least one reflector has a concave focal length $f_1$ and the other reflector a convex focal length $f_2$.

The state of said first deformable reflector and said second deformable reflector are preferably selected to provide one positive and one negative focal length, the reflectors in each pair may be located at distance (d) apart from each other, where $d \geq f_1 + f_2$. For afocal systems the distance d is equal to or substantially equal to $f_1 + f_2$, this may be used in systems such as, for example laser optics, where the final reflector may advantageously provide a substantially parallel beam, and hence provide a magnified or demagnified beam, without the formation of a focal point, to avoid air breakdown. For image based optics a focussed image is desirable hence the distance d is preferably greater than $f_1 + f_2$.

Therefore one pair of reflectors can provide two magnification settings M and 1/M where

$$M = \frac{R_1}{R_2} = \frac{f_1}{f_2}$$

$R_1$ and $R_2$ are the radii of the curvature of the reflectors

$f_1$ and $f_2$ are the focal length of the reflectors

Further pairs of reflectors may be used in series to provide finer steps in beam expansion/reduction, such as, for example three pairs with magnifications of 2, $2^{1/2}$ and $2^{1/4}$ respectively can provide the following fixed magnification steps

$2^{7/4} \sim 3.4$,
$2^{5/4} \sim 2.4$
$2^{3/4} \sim 1.7$
$2^{1/4} \sim 1.2$
$2^{-1/4} \sim 0.84$
$2^{-314} \sim 0.59$
$2^{-5/4} \sim 0.42$
$2^{-714} \sim 0.30$

Thus with very simple optics systems a large number of pre-set magnification or demagnification states can be readily achieved.

The deformable reflectors may be manufactured from any material which is capable of exhibiting resilience and reflectance, such materials may be selected from metals, metal alloys or a deformable substrate with at least one reflective layer.

The deformable substrate may be reflective or non-reflective with at least one reflective layer. The non-reflective deformable substrate may be selected from a resilient polymer or plastic with at least one reflective surface coating thereon. The deformable substrate may be formed from multiple layers, such as a deformable metal layer with a further non reflective layer to provide the correct degree of movement to provide the desired

focal lengths $f_1$ and $f_2$, and deposited on said non-reflective layer a further at least one reflective layer.

The deformable reflector may comprise a deformable substrate, such as a metal or alloy which may be further coated with at least one reflective layer, to provide an improved optical reflectance range. Preferably the at least one reflective layer is a different metal or metal alloy. The selection of metals such as, for example gold allows optical reflectance across a very broad optical range, such as for example from 350nm to 12microns.

In a preferred arrangement the deformable reflectors may be manufactured from a metal, particularly steels, which are capable of possessing at least one stress point, which is imparted by stamping, pressing, typically with a slight torque, commonly referred to as a sprung metal. The stress point provides the reflector with two states. Pressing or applying a force to the reflector causes it to move in and out of alignment with the original pre-worked material. The movement, in and out of line of the reflector from the original pre-worked state, corresponds to the first and second states. Movement between the two states may be heard as a sharp click. The reflectors depending on the number of stress points applied thereon, may be capable of adopting a plurality of states. The steel may be further coated with at least one reflective layer.

The controller causes movement of at the pair of deformable reflectors between each state. The deformable reflectors may be designed to have 2, 3, 4 or a plurality of states. However the controller, in order to provide the movement between 3, 4 or more states becomes increasingly complex, requiring fine control over the movements required to engage each state. Therefore in a highly preferred arrangement the deformable reflectors are bistable reflectors, such that they possess two stable states. in a bistable system when the reflector has moved between states there is substantially zero electrical power required to maintain each state. The use of only two stable states allows the controller to be robust and have only binary movements, essentially an on and off state.

The controller provides the movement between said first state and second state, this movement may be caused by the application of a force acting upon said pair deformable reflectors. The controller may act upon the pair of reflectors, or each reflector may have its own controller.

In a further arrangement the pair of reflectors may be operably linked, such that causing the first reflector to deform from a first state to a second state causes the concomitant deforming of the second reflector from its first to second state.

The controller may use any means which can flip the reflector between the at least two states, such as, for example a solenoid acting on a magnetised portion of the deformable reflector, a physical coupling to a solenoid, the application of a positive or negative pressure by means of a fluid to one of the surfaces of the reflector, more preferably a magnetic force applied to said deformable reflector. If the reflector is not susceptible to the forces of a magnetic field a small magnet may be attached to the reflector or its deformable substrate.

According to a further aspect of the invention there is provided an optical system, comprising at least one optical magnification device according to the invention.

The optical system may be part of a camera, detector system, any system which requires the use of an optical zoom, such as images, laser optics. The optical system may comprise further optical elements, to alter the visual output.

According to a yet further aspect of the invention there is provided a method of providing optical magnification, comprising the steps of providing a pair of deformable reflectors capable of forming at least two configurations, wherein a first deformable reflector is capable of adopting at least two states, wherein said states provide at least one positive and at least one negative focal length, and

a second deformable reflector capable of adopting at least two states, wherein said states provide at least one positive and at least one negative focal length, and causing said first and second deformable reflectors to be selected from at least one positive and at least one negative focal length.

An embodiment of the invention will now be described by way of example only and with reference to the accompanying drawings of which:-

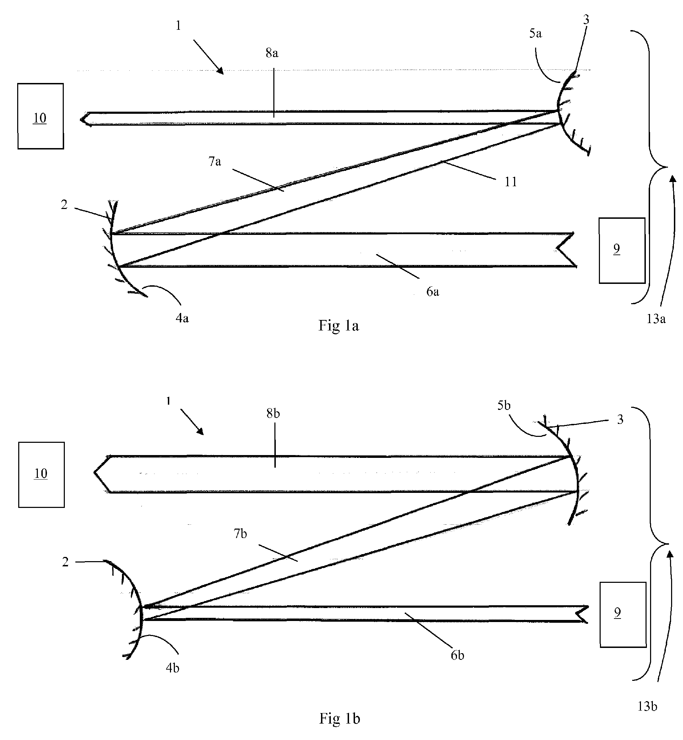

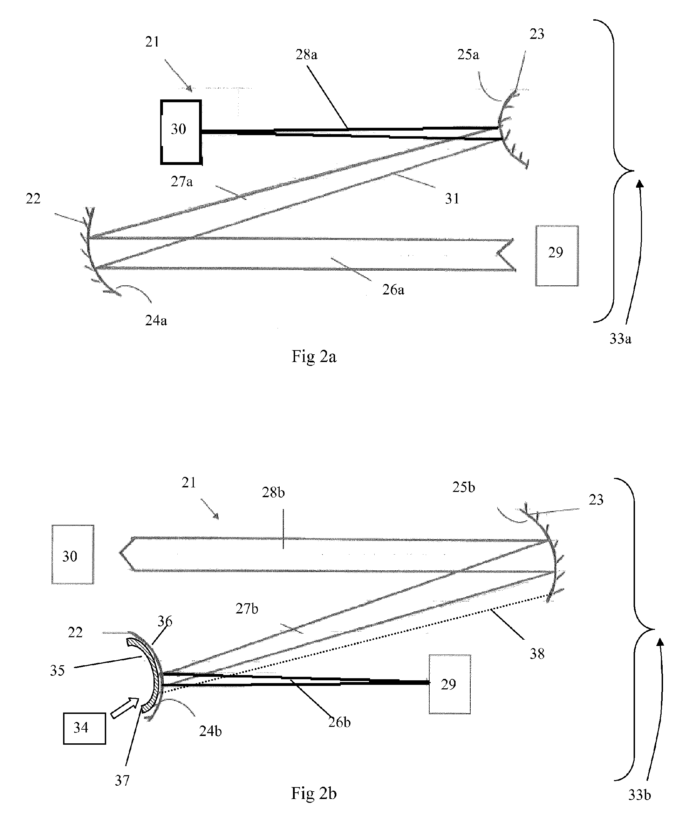

Figures 1a and 1b show ray diagrams with a pair of deformable reflectors in an afocal arrangement. Figures 2a and 2b show ray diagrams with a pair of deformable reflectors in a focusable arrangement.

Turning to figure 1a there is provided an afocal magnification device 1, which is formed of a pair of deformable reflectors 2, 3. In figure 1a is a first configuration 13a, where the output 8a is an afocal demagnified image at the receiver 10. Figure 1b is a second configuration 13b, where the output 8b is an afocal magnified image at receiver 10. The receiver 10 may be an observer, CCD, or other form of image capture device. The image 9 to be magnified maybe generated from a screen, or may be an image of surroundings or terrain.

In figure 1a, the light 6a from image 9 is reflected off of a first reflector 2, which has a first state 4a, generally a concave state. The action of the concave lens is to focus the beam 11, onto the second reflector 3. The first reflector 2 is optically aligned 7a, with a second reflector 3. The second reflector 3 is in a second state 5a, which is generally a convex state. The incoming focused beam 11 impinges on the second reflector 3, which is in a convex state which provides output beam 8a.

In figure 1b the light 6b from image 9 is reflected off of a first reflector 2, which has a second state 4b, generally a convex state. The action of the convex lens is to diverge the beam 11, onto the second reflector 3.

The first reflector 2 is optically aligned 7b, with a second reflector 3. The second reflector 3 is in a first state 5b, which is generally a concave state. The incoming diverged beam 11 impinges on the second reflector 3, which is in a concave state which provides output beam 8b, which is a magnified output of image 9.

Turning to figure 2a there is provided a focussed magnification device 21, which is formed of a pair of deformable reflectors 22, 23. In figure 2a is a first configuration 33a, where the output 28a is a focussed demagnified image at the receiver 30. Figure 2b is a second configuration 33a, where the output 28b is a focussed magnified image at receiver 30. The receiver 30 may be an observer, CCD, or other form of image capture device. The image 29 to be magnified maybe generated from a screen, or may be an image of surroundings or terrain.

In figure 2a, the light 26a from image 29 is reflected off of a first reflector 22, which has a first state 24a, generally a concave state. The action of the concave lens is to focus the beam 21, onto the second reflector 23. The first reflector 22 is optically aligned 27a, with a second reflector 23. The second reflector 23 is in a second state 25a, which is generally a convex state. The incoming focused beam 31 impinges on the second reflector 23, which is in a convex state which provides output beam 28a.

In figure 2b the light 26b from image 29 is reflected off of a first reflector 22, which has a second state 24b, generally a convex state. The action of the convex lens is to diverge the beam 31, onto the second reflector 23. The first reflector 22 is optically aligned 27b, with a second reflector 23. The second reflector 23 is in a first state 25b, which is generally a concave state. The incoming diverged beam 31 impinges on the second reflector 23, which is in a concave state which provides output beam 28b, which is a magnified output of image 29.

The reflector 22 is deformable substrate 35 with a reflective layer 36 located thereon. The deformable substrate 35 comprises a magnetic 37, such that when the controller 34, a solenoid, is activated is causes the deformable substrate 35 to flip between states 24a and 24b, i.e. concave to convex. The pair of deformable reflectors 22 and 23 may be operably linked 38 by a tether, such that movement of the reflector 22, causes the movement of the reflector 23.

**Claims**

1. An optical magnification device comprising at least one pair of optically aligned deformable reflectors, wherein each reflector pair has at least two configurations, wherein selection of a first and a second configuration of said deformable reflector pairs provides predefined magnification states, such that in any configuration one reflector is substantially concave and the other is substantially convex.

2. A device according to claim 1, wherein the first configuration of the pair of reflectors is substantially magnifying, and the second configuration is substantially de-magnifying.

3. A device according to any one of the preceding claims, wherein the at least two deformable reflectors comprise a first deformable reflector and a second deformable reflector, wherein the first reflector has a first state with a first focal length $f_2$, and second state with a second focal length $f_1$, and the second reflector has a first state with a first focal length $f_2$, and second state with a second focal length $f_1$, such that in each configuration of said pair of reflectors, at least one reflector has a concave focal length $f_1$ and the other reflector a convex focal length $f_2$

4. A device according to any one of the preceding claims wherein the deformable reflectors have two or more states.

5. A device according to any one of the preceding claims wherein the reflectors in each pair are located at distance d, where $d \geq f_1 + f_2$.

6. A device according to claim 5, each pair are located at distance d where d >

7. A device according to any one of the preceding claims, wherein the at least two deformable reflectors are made from a metal, alloy or a resilient substrate with a reflective layer.

8. A device according to any one of the preceding claims wherein said deformable reflectors are sprung reflectors.

9. A device according to claim 7 wherein the at least one reflective layer is a metal or metal alloy.

10. A device according to any one of the preceding claims wherein the deformable reflectors are bistable reflectors.

11. A device according to any one of the preceding claims wherein the first state and the second state are caused by application of a force on said deformable reflectors.

12. A device according to claim 11, wherein the force is magnetic force applied to said deformable reflectors.

13. A device according to any one of the preceding claims wherein the pair of reflectors are operably linked, such that causing the first reflector to deform from a first state to a second state causes the concomitant deforming of the second reflector from its first to second state.

**14.** An optical system, comprising at least one optical magnification device according to any one of the preceding claims.

**15.** A method of providing optical magnification, comprising the steps of providing

a pair of deformable reflectors capable of forming at least two configurations, wherein a first deformable reflector is capable of adopting at least two states, wherein said states provide at least one positive and at least one negative focal length, and

a second deformable reflector capable of adopting at least two states, wherein said states provide at least one positive and at least one negative focal length, and

causing said first and second deformable reflectors to be selected from at least one positive and at least one negative focal length.

Fig 1a

Fig 1b

Fig 2a

Fig 2b

Europäisches
Patentamt

European
Patent Office

Office européen
des brevets

## EUROPEAN SEARCH REPORT

Application Number

EP 14 27 5110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 027518 B3 (FRAUNHOFER GES FORSCHUNG [DE]) 25 March 2010 (2010-03-25) | 1-7,9, 14,15 | INV. G02B15/00 G02B17/02 |
| Y | * paragraphs [0001] - [0003], [0089] - paragraphs [0122], [0139] - [0161]; figures 1-3,9,16 * | 8,10-13 | G02B26/08 |
| Y | US 4 074 253 A (NADIR MARK T) 14 February 1978 (1978-02-14) * column 2 - column 5; figures 2,4,7A,7B,8A,8B * | 8,10-12 | |
| A | WO 98/45746 A1 (SONG MICRO TECHNOLOGY LTD [IL]; FRIEDMAN MARK M [IL]; CHERTKOW ROBERTO) 15 October 1998 (1998-10-15) * Page 1,11,12; pages 17-19; figures 1a-1c * | 8,10-12 | |
| X | US 7 986 465 B1 (LO YU-HWA [US] ET AL) 26 July 2011 (2011-07-26) | 1 | |
| Y | * Column 5, lines 3-21; column 7, line 59 - column 8, line 26; figures 3,4a,4b * | 13 | TECHNICAL FIELDS SEARCHED (IPC) |
| X | US 6 977 777 B1 (WICK DAVID V [US]) 20 December 2005 (2005-12-20) | 1 | G02B |
| A | * column 5 - columns 8,10; figures 4,5 * | 2-7,14, 15 | |

The present search report has been drawn up for all claims

| Place of search | Date of completion of the search | Examiner |
|---|---|---|
| Munich | 10 September 2014 | Feeney, Orla |

EPO FORM 1503 03.82 (P04C01)

**ANNEX TO THE EUROPEAN SEARCH REPORT
ON EUROPEAN PATENT APPLICATION NO.**                  EP 14 27 5110

This annex lists the patent family members relating to the patent documents cited in  the above-mentioned European search report.
The members are as contained in the European Patent Office EDP file on
The European Patent Office is in no way liable for these particulars which are merely given for the purpose of information.

10-09-2014

| Patent document cited in search report | | Publication date | Patent family member(s) | | Publication date |
|---|---|---|---|---|---|
| DE 102008027518 | B3 | 25-03-2010 | NONE | | |
| US 4074253 | A | 14-02-1978 | NONE | | |
| WO 9845746 | A1 | 15-10-1998 | AU | 6956498 A | 30-10-1998 |
| | | | US | 6130771 A | 10-10-2000 |
| | | | WO | 9845746 A1 | 15-10-1998 |
| US 7986465 | B1 | 26-07-2011 | NONE | | |
| US 6977777 | B1 | 20-12-2005 | NONE | | |

EPO FORM P0459

For more details about this annex : see Official Journal of the European Patent Office, No. 12/82